# EUROPÄISCHE PATENTSCHRIFT

(11) **EP 1 525 106 B1**
(45) Veröffentlichungstag und Bekanntmachung des Hinweises auf die Patenterteilung: **03.12.2008**
(21) Anmeldenummer: 03766337.4
(22) Anmeldetag: 29.07.2003
(51) Int. Cl.: B60C 23/04

(54) **EINRICHTUNG ZUM ÜBERWACHEN UND DRAHTLOSEN SIGNALISIEREN EINES DRUCKS ODER EINER DRUCKÄNDERUNG IN LUFTREIFEN**
DEVICE FOR THE MONITORING AND WIRELESS SIGNALING OF A PRESSURE OR A CHANGE OF PRESSURE IN PNEUMATIC TIRES
DISPOSITIF POUR LA SURVEILLANCE ET LA SIGNALISATION SANS FIL D'UNE PRESSION OU D'UNE MODIFICATION DE PRESSION DE PNEUMATIQUES

(30) Priorität: 01.08.2002 DE 10235127
(43) Veröffentlichungstag der Anmeldung: 27.04.2005
(73) Patentinhaber: Beru Aktiengesellschaft, 71636 Ludwigsburg (DE)
(72) Erfinder: SCHULZE, Gunter, 75228 Ispringen (DE); NEUMANN, Markus, 68259 Mannheim (DE)
(74) Vertreter: Twelmeier Mommer & Partner
(86) Internationale Anmeldenummer: PCT/EP2003/008349
(87) Internationale Veröffentlichungsnummer: WO 2004/012948

(56) Entgegenhaltungen:
- EP-A- 1 197 356

## Beschreibung

Die Erfindung betrifft eine Einrichtung zum Überwachen und drahtlosen Signalisieren eines Drucks oder einer Druckänderung in Luftreifen an Fahrzeugen mit den im Oberbegriff des Anspruchs 1 angegebenen Merkmalen. Eine solche Einrichtung ist aus der EP 1197356 A2 bekannt.

Bei einer solchen Einrichtung ist im Inneren des Luftreifens ein Gerät mit einer elektronischer Schaltung, nachfolgend als Radelektronik bezeichnet, angeordnet, welches dem Druck im Luftreifen ausgesetzt ist. Die Radelektronik hat eine Batterie als Stromquelle, einen Drucksensor, welcher den im Luftreifen herrschenden Druck misst, einen Sender zum Übertragen von Informationen über den Druck oder die Druckänderung und einen Empfänger zum Empfangen von drahtlosen Abfrage und/oder Steuerungssignalen.

Da bei einer solchen Radelektronik ein Austausch der Batterie nicht oder nur unter großen Kosten möglich ist, wird ein möglichst Energie sparender Betrieb der Radelektronik angestrebt. Insbesondere sollte die Batterie eine mit der Lebensdauer des Fahrzeugs möglichst übereinstimmende Lebensdauer haben. Wird die Radelektronik, wie beispielsweise in der DE 199 39 936 A1, durch von einem Abfragesender ausgesandte drahtlose Abfrage und/oder Steuerungssignale zum Aussenden von Signalen über den Druck oder die Druckänderung veranlasst, lässt sich erreichen, daß das besonders energieintensive Senden von Informationen über den Druck oder die Druckänderung nur dann erfolgt, wenn diese Informationen auch wirklich benötigt werden. Vorteilhaft kann so beispielsweise bei geparktem Fahrzeug ein Senden von Druckdaten unterbleiben und die Senderate an die Fahrgeschwindigkeit angepasst werden. Durch die Steuerung einer Radelektronik mittels Abfrage und/oder Steuerungssignal lässt sich auf diese Art und Weise ein besonderes energiesparender Betrieb der Radelektronik erreichen. Bei Verwendung einer Litiumbatterie mit den Abmessungen einer Knopfzelle lassen sich so Lebensdauern von sieben Jahren und mehr erreichen.

Neben einem möglichst Energie sparenden Betrieb stellt die eindeutige und nach einem Reifenwechsel möglichst schnelle Zuordnung der Radelektronik zu der Position ihres Rades am Fahrzeug ein ständiges Problem dar. Die DE 197 35 686 A1 lenkt zu diesem Zweck mit der Radelektronik auch die Bahnbeschleunigung und die Korreolisbeschleunigung des jeweiligen Rades zu erfassen und auszuwerten. Wie dort im einzelnen erläutert ist, lassen sich auf diese Art und Weise sowohl gelenkte Vorderräder von ungelenkten Hinterrädern als auch linke Räder von rechten Rädern unterscheiden. Jede Radelektronik sendet bei diesem Verfahren zusammen mit Messsignalen über den Druck oder eine Druckänderung, über die Bahnbeschleunigung und die Zentrifugalbeschleunigung auch eine für sie charakteristische Kennung. Eine im oder am Fahrzeug vorgesehene Auswerteschaltung kann nun durch eine statistische Auswertung der Zentrifugalbeschleunigung und Bahnbeschleunigung die verschiedenen Radelektroniken anhand ihrer Kennungen den jeweiligen Radpositionen selbständig zuordnen. Nach einer erstmaligen Montage von Rädern am Fahrzeug oder auch nach einem Radwechsel lernt die Auswerteeinheit somit automatisch, welche Radelektronik zu welcher Radposition gehört.

Nachteilig an dem in der DE 197 35 686 A1 offenbarten Verfahren ist jedoch, daß beispielsweise nach einem Reifenwechsel mehrere Minuten Fahrt erforderlich sind, bis sich aus den gemessenen Zentrifugal- und Bahnbeschleunigungswerten feststellen läßt, welche Kennung einer bestimmten Radposition zuzuordnen ist.

Aufgabe der Erfindung ist es daher, einen Weg aufzuzeichnen, wie bei einem Energie sparenden Betrieb der jeweils in den Reifen des Fahrzeugs angeordneten Radelektroniken die Zuordnung von Kennungen der Radelektroniken zu den jeweiligen Radpositionen schneller erfolgen kann.

Diese Aufgabe wird von einer Einrichtung mit den im Anspruch 1 angegebenen Merkmalen gelöst. Vorteilhafte Weiterbildungen der Erfindung sind Gegenstand der Unteransprüche.

Anstatt wie bei der DE 199 39 936 A1 den Sender zum Senden von Abfrage- und/oder Steuersignalen, nachfolgend Abfragesender genannt, ebenso wie den in der Radelektronik vorgesehenen Sender als einen Hochfrequenzsender (beispielsweise in Deutschland im 433 MHz-Bereich, in den USA im 315 MHz-Bereich) vorzusehen, ist erfindungsgemäß der Abfragesender mit einer Sendefrequenz von weniger als 1 MHz vorgesehen, bevorzugt im Frequenzbereich von 50 bis 300 kHz, besonders bevorzugt 70 bis 150 kHz. Diese Maßnahme bietet den Vorteil, daß die magnetische Komponente eines ausgesandten Funksignales bereits in einem Abstand von 0,5 bis 1 m stark abgeklungen ist, so daß keine weiteren Maßnahmen erforderlich sind, um ein Ansprechen der Radelektronik eines fremden Fahrzeugs zu verhindern. Sieht man nun für jedes Rad eines Fahrzeuges einen solchen Abfragesender vor, beispielsweise im jeweiligen Radgehäuse, so lassen sich die in den verschiedenen Reifen des Fahrzeugs jeweils angeordneten Rad- elektroniken individuell über den ihnen jeweils nächstliegenden Abfragesender ansprechen. Aufgrund des raschen Abklingens der magnetischen Komponente eines von einem der Abfrageseder ausgesendeten Signals lässt sich erreichen, daß dieses Signal jeweils nur von der nächstliegenden Radelektronik empfangen wird. Auf diese Art und Weise vereinfacht sich die Zuordnung der Kennungen der Radelektroniken zu einer bestimmten Radposition erheblich. Um zu lernen, welche Kennung welcher Radposition zuzuordnen ist, veranlaßt die Auswerteschaltung einfach nacheinander über den jeweiligen Abfragesender die an der jeweiligen Radposition befindlichen Radelektroniken zum Aussenden ihrer Kennung. Wird also beispielsweise der dem linken Vorderrad zugeordnete Abfragesender zum Aussenden eines Abfragesignals veranlaßt, so wird dieses Abfragesignal nur von der im linken Vorderreifen angeordneten Radelektronik empfangen, weshalb auch nur diese durch Aussenden ihrer Kennung antwortet. Die auf das Aussenden eines Abfragesignals mit dem dem linken Vorderrad zugeordneten Sender empfangene Kennung ist also dem linken Vorderrad zuzuordnen. Auf diese Art und Weise ist es der Auswerteschaltung möglich, in Sekundenschnelle beim Start eines Fahrzeugs zu lernen, welche Kennungen zu welchen Radpositionen gehören. Vorteilhaft ist so selbst nach einem Reifenwechsel bereits bei Fahrtbeginn -oder sogar davor- eine Überwachung des Reifendrucks möglich.

Wie aus der EP 1197356 A2 bekannt, könnte man nun den Abfragesender mit einer fest vorgegebenen Frequenz von beispielsweise 125 kHz betreiben. Aufgrund von unvermeidlichen Fertigungstoleranzen und vor allem auch der durch die Einbaulage und sonstige Umgebungseinflüsse gegebenen elektro-magnetischen Randbedingungen, lässt sich die Resonnanzfrequenz des Schwingkreises im am Fahrzeug eingebauten Zustand im voraus nur sehr schwer vorhersagen. Demzufolge ist bei einem Betrieb des Abfragesenders mit einer im voraus festgelegten Frequenz von beispielsweise 125 kHz davon auszugehen, daß der Abfragesender nicht mit seiner Resonnanzfrequenz betrieben wird, sondern einer Abweichung von typischerweise bis zu ± 50 kHz. Betreibt man jedoch den Abfragesender mit einer von seiner Resonnnanzfrequenz abweichenden Frequenz, so wächst dessen Strombedarf sehr stark an. So kann beispielsweise der Betrieb eines Abfragesenders mit einer Resonanzfrequenz von 100 kHz bei 125 kHz Stromstärken im Bereich von 500 bis 1000 mA erfordern. Dies führt jedoch zu einer unerwünschten Belastung der Fahrzeugbatterie. Sieht man im Schwingkreis einen Verstärker vor, so daß der Verstärkerausgang, die Sendeantenne und der Verstärkereingang in Reihe geschaltet sind, und dabei der Verstärkereingang mit dem Verstärkerausgang rückgekoppelt ist, so erreicht man, daß der Schwingkreis stets mit seiner Resonanzfrequenz schwingt. Vorteilhaft sinkt auf diese Weise der Strombedarf des Abfragesenders erheblich, so daß die Fahrzeugbatterie nur noch unwesentlich belastet ist und auch beispielsweise bei einem geparkten Fahrzeug über längere Zeit eine Überwachung des Reifendrucks möglich ist.

Bevorzugt ist in dem Schwingkreis ein Komparator vorgesehen, welcher eine an seinem Komparatoreingang anliegende, sich zeitlich ändernde Spannung in eine Rechteckspannung umwandelt. Zu diesem Zweck vergleicht der Komparator die an seinem Eingang anliegende Spannung mit einem vorgegebenen Nullwert. Falls dieser Nullwert überschritten wird, legt der Komparator seinen Komparatorausgang auf eine hohe, andernfalls auf eine tiefe Spannung, so daß im zeitlichen Verlauf eine Rechteckspannung entsteht. Ein solcher Komparator dient also dazu, den Schwingkreis mit einer Rechteckspannung anzuregen, was den Vorteil hat, daß die Verlustleistung geringer ist. Auf diese Art und Weise läßt sich der Stromverbrauch des Abfragesenders weiter senken.

Der Strahler des Abfragesenders, als die Sendeantenne, ist bevorzugt als eine Stabantenne, insbesondere eine Ferritstabantenne ausgeführt. Diese Maßnahme hat den Vorteil, daß die Abfrage und/oder Steuerungssignale mit einer hohen Richtwirkung abgestrahlt werden. Aus Platzgründen ist in der Radelektronik der Empfänger als eine eindimensionale Antenne, also eine Spule, ausgeführt. Die gute Richtwirkung einer Stabantenne, insbesondere einer Ferritstabantrenne, führt daher zu einer guten Ausnutzung der Sendeleistung und trägt daher ebenfalls zu einem Strom sparenden Betrieb bei. Bevorzugt trägt überwiegend der Strahler zum Wirkwiderstand des Schwingkreises bei. Ist nämlich der Strahler das Frequenz bestimmende Element eines Schwingkreises hoher Güte, beispielsweise einer Güte von 20 oder mehr, so strahlt der Schwingkreis im Resonanzfall nur in einem sehr schmalen Frequenzbereich, was ebenfalls zu einem Energie sparenden Betrieb beiträgt.

Weitere Einzelheiten und Vorteile der Erfindung werden anhand eines Ausführungsbeispieles unter Bezugnahme auf die beigefügte Zeichnung erläutert.

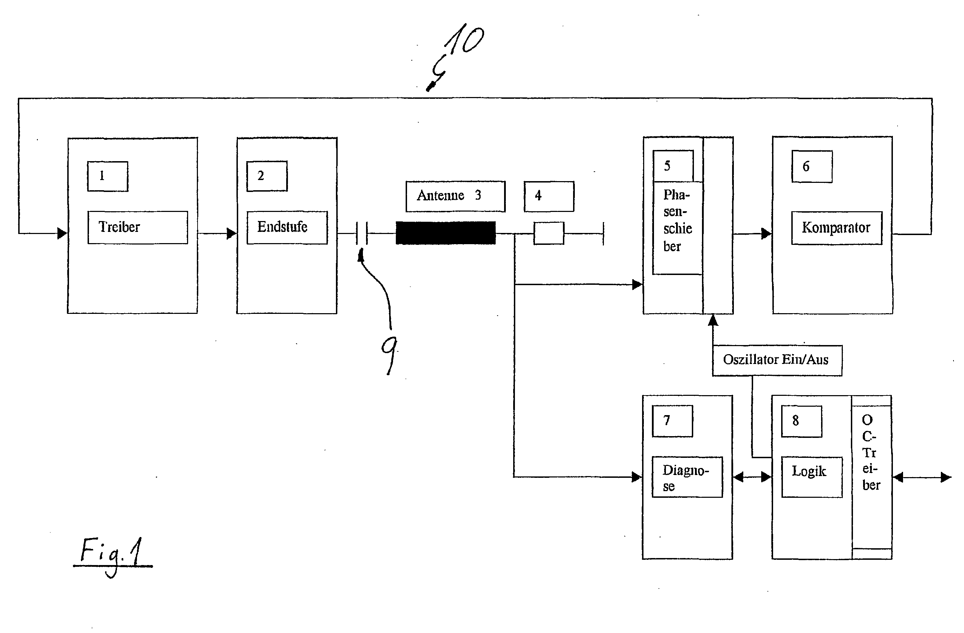

Figur 1 zeigt ein Blockschaltbild des Schwingkreises einer erfindungsgemäßen Einrichtung.

Die wesentlichen Komponenten des in Figur 1 gezeigten Blockdiagramms des Senders zum Senden von Abfrage und/oder Startsignalen sind der Kondensator 9, der als Ferritstabantenne ausgebildete Strahler 3, der Phasenschieber 5, der Komparator 6, der Treiber 1 und die dazugehörige Endstufe 2, welche zusammen einen Schwingkreis 10 in Form eines Serienresonanzkreises ausbilden. Treiber 1 und Endstufe 2 dienen als Verstärker zum Verstärken der elektromagnetischen Schwingungen in dem als Serienresonanzkreis ausgebildeten Schwingkreis. Dabei ist der Ausgang der Endstufe 2, also der Verstärkerausgang mit dem Eingang des Treibers, also dem Treibereingang rückgekoppelt. Dadurch wird erreicht, daß der Schwingkreis stets nur mit seiner Resonanzfrequenz schwingt, was vorteilhaft dessen Strombedarf minimiert.

Der Treiber 1 und die Endstufe 2 verursachen dabei eine Phasenverschiebung zwischen Strom und Spannung von ca. 90 °, welche von dem Phasenschieber 5 kompensiert wird. Der Serienresonanzkreis enthält den Komparator 6, welcher eine an seinem Eingang anliegende Sinusspannung in eine Rechteckspannung verwandelt. Hierzu vergleicht der Komparator 6 eine an seinem Eingang anliegende Spannung mit einem vorgegebenen Null- oder Mittelwert. Wird dieser vorgegebene Nullwert überschritten, so wird der Ausgang des Komparators auf eine Spannung von beispielsweise 12 Volt gelegt, andernfalls auf eine niedrigere Spannung von beispielsweise 0 Volt, so daß eine Sinusspannung in eine Rechteckspannung verwandelt wird. Auf diese Art und Weise wird der Sendestrom nur vom Antennenresonanzkreis bestimmt und besitzt deshalb keine unerwünschten Oberwellen. Die Verlustleistung wird ebenfalls auf ein Miniumum beschränkt. Möglich ist es aber auch, den Serienresonanzkreis ohne einen Komparator 6 auszubilden und an den Eingang des Treibers an Stelle einer Rechteckspannung direkt die vom Phasenschieber 5 ausgegebenen Sinusspannung anlegen. Allerdings hätte man dann den Nachteil einer etwas höheren Verlustleistung und mehr unerwünschten Oberwellen.

Bei dem Strahler 3 handelt es sich um eine Ferritstabantenne. Die Resonanzfrequenz des Schwingkreises 10 wird neben den nur sehr schwer oder gar nicht vorhersagbaren elektromagnetischen Randbedingungen der Einbaulage, beispielsweise im Radkasten des Kraftfahrzeuges, im Wesentlichen von dem Strahler 3 bestimmt. Der als Serienresonanzkreis ausgebildete Schwingkreis 10 weist bevorzugt eine Güte von mindestens 20 auf, so daß sich die Sendeleistung sehr gut vorgeben lässt. Dies ist wichtig, um sicherzustellen, daß die von dem Sender abgestrahlten Signale einerseits die im zugeordneten Rad befindliche Radetektronik zuverlässig erreichen, andererseits aber von einer in einem weiter entfernten Rad angeordneten Radelektronik bereits nicht mehr empfangen werden können. Da die Güte des Schwingkreises 10 im Gegensatz zur Resonanzfrequenz im Wesentlichen von der Einbaulage unabhängig ist, lässt sie sich sehr gut vorgeben, so daß Sendeleistung und Reichweite des Senders sich entsprechend den Anforderungen festlegen lassen.

Der durch den Strahler 3 fließende Strom wird mit einem nicht gezeigten Strommessgerät gemessen und von einer Diagnoseeinrichtung 7 ausgewertet. Eine Logikeinheit 8 überwacht anhand der ihr von der Diagnoseeinheit 7 zur Verfügung gestellten Daten den Betrieb des Schwingkreises 10 und schaltet diesen ggfls. durch ein dem Phasenschieber 5 zugeleitetes Steuersignal ein oder aus. Die Logikeinheit 8 steht über einem Openkollektortreiber mit einer im oder am Fahrzeug angebrachten Zentraleinheit (nicht gezeigt) in Verbindung und wird von dieser angesprochen, um das Aussenden von Abfrage und/oder Steuersignalen zu veranlassen.
Bei dem in Figur 1 gezeigten Ausführungsbeispiel werden die Strommesswerte für die Diagnoseeinheit 7 unmittelbar hinter dem Strahler 3 gewonnen. An sich könnte der Strom zwar auch an einer beliebigen anderen Stelle im Schwingkreis 10 gemessen werden, jedoch ist es vorteilhaft dies so nah wie möglich an dem Strahler 3 zu tun. Auf diese Art und Weise gewinnt man die zuverlässigsten und genauesten Messwerte über den Strom durch den Strahler 3 und damit über die Sendeleistung. Insbesondere lassen sich auf diese Art und Weise Defekte und Abweichungen von der Sollleistung am schnellsten und zuverlässigsten diagnostizieren.

## Patentansprüche

1. Einrichtung zum Überwachen und drahtlosen Signalisieren eines Drucks oder einer Druckänderung in Luftreifen an Fahrzeugen mit einer im Luftreifen angeordneten Radelektronik, welche eine Batterie als Stromquelle, einen Drucksensor zum Messen des Drucks oder der Druckänderung, einen Hochfrequenzsender zum Übertragen eines vom Signal des Drucksensors abgeleiteten Signals und einen Empfänger zum Empfangen von drahtlosen Abfrage- und/oder Steuerungssignalen aufweist,
und mit einem im oder am Fahrzeug vorgesehenen Empfänger zum Empfang des vom Signal des Drucksensors abgeleiteten Signals, einer Einrichtung um dem Fahrer Informationen über den Druck oder die Druckänderung zu signalisieren, sowie einem Sender zum Senden von Abfrage- und/oder Steuersignalen, wobei in der Nähe jeden Laufrades jeweils ein Sender zum Senden von Abfrage- und/oder Steuersignalen angeordnet ist, und diese Sender eine Sendefrequenz von weniger als 1 MHz aufweisen, **dadurch gekennzeichnet, dass** der Sender zum Senden von Abfrage- und/oder Steuersignalen als ein Schwingkreis (10) ausgebildet ist, welcher einen Strahler (3) und einen Verstärker (1,2) mit einem Verstärkereingang und einem Verstärkerausgang enthält, wobei der Verstärkerausgang mit dem Verstärkereingang rückgekoppelt ist.

2. Einrichtung nach Anspruch 1, **dadurch gekennzeichnet, dass** der Schwingkreis (10) einen Komparator (6) enthält, welcher eine an seinem Eingang anliegende Spannung, welche sich zeitlich ändert, in eine Rechteckspannung verwandelt.

3. Einrichtung nach einem der vorstehenden Ansprüche, **dadurch gekennzeichnet, dass** der Schwingkreis (10) ein Serienresonanzkreis ist.

4. Einrichtung nach einem der vorstehenden Ansprüche, **dadurch gekennzeichnet, dass** der Schwingkreis (10) einen Strahler (3) aufweist, welcher im Radgehäuse des Fahrzeugs angeordnet ist.

5. Einrichtung nach einem der vorstehenden Ansprüche, **dadurch gekennzeichnet, dass** der Strahler (3) eine Ferritstabantenne ist.

6. Einrichtung nach einem der vorstehenden Ansprüche, **dadurch gekennzeichnet, dass** der Schwingkreis (10) einen Wirkwiderstand aufweist, zu welchem überwiegend der Strahler (3) beiträgt.

7. Einrichtung nach einem der vorstehenden Ansprüche, **dadurch gekennzeichnet, dass** ein Strommeßgerät vorgesehen ist, welches den durch den Strahler (3) fließenden Strom mißt und seine Meßergebnisse einer Logikschaltung (7,8) zur Verfügung stellt.

8. Einrichtung nach einem der vorstehenden Ansprüche, **dadurch gekennzeichnet, dass** die Güte des Schwingkreises (10) einen Wert von 20 oder mehr aufweist.

9. Einrichtung nach einem der vorstehenden Ansprüche, **dadurch gekennzeichnet, dass** die Sendefrequenz des Senders zum Senden von Abfrage- und/oder Steuersignalen 50 bis 300 kHz, vorzugsweise 70 bis 150 kHz beträgt.

## Claims

1. A device for monitoring and wireless signaling of a pressure or a change of pressure in pneumatic tires on vehicles, comprising
wheel electronics that are disposed inside the pneumatic tire and are provided with a battery as a power source, with a pressure sensor for measuring the pressure or the change of pressure, with a RF-transmitter for transmitting a signal derived from the signal of the pressure sensor, and with a receiver for receiving wireless interrogation signals and/or control signals,
and a receiver which is arranged in or on the vehicle and which receives the signals derived from the signal of the pressure sensor,
a device for signaling to the driver informations relating to the pressure or change of pressure,
and transmitters for emitting interrogation signals and/or control signals, the transmitters being disposed, respectively, individually near each running wheel and having a transmission frequency of less than 1 MHz, **characterized in that** the transmitter for emitting interrogation and/or control signals is designed as an oscillating circuit (10) comprising a radiator (3) and an amplifier (12) having an amplifier input and an amplifier output, the amplifier output being coupled back to the amplifier input.

2. The device as defined in Claim 1, **characterized in that** the oscillating circuit (10) comprises a comparator (6) which transforms a voltage applied to its input, which varies over time, to a square-wave voltage.

3. The device as defined in any of the preceding claims, **characterized in that** the oscillating circuit (10) is a series-resonant circuit.

4. The device as defined in any of the preceding claims, **characterized in that** the oscillating circuit (10) comprises a radiator (3) arranged in the wheel case of the vehicle.

5. The device as defined in any of the preceding claims, **characterized in that** the radiator (3) is a ferrite rod antenna.

6. The device as defined in any of the preceding claims, **characterized in that** the oscillating circuit (10) comprises an active resistance to which the radiator (3) provides the predominant contribution.

7. The device as defined in any of the preceding claims, **characterized in that** a current meter is provided for measuring the current flowing through the radiator (3) and for supplying its measured values to a logic circuit (7, 8).

8. The device as defined in any of the preceding claims, **characterized in that** the oscillating circuit (10) has a Q value of at least 20.

9. The device as defined in any of the preceding claims, **characterized in that** the transmission frequency of the transmitter for emitting interrogation and/or control signals is 50 to 300 kHz, preferably 70 to 150 kHz.

## Revendications

1. Dispositif pour la surveillance et la signalisation sans fil d'une pression ou d'un changement de pression dans des pneus sur de véhicule, comprenant une électronique de roue disposée dans le pneu, qui présente une batterie comme source de courant, un capteur de pression pour mesurer la pression ou le changement de pression, un émetteur haute fréquence pour la transmission d'un signal dérivé du signal du capteur de pression et un récepteur pour la réception de signaux d'interrogation et/ou de signaux de commande sans fil,
et comprenant un récepteur prévu dans ou sur le véhicule automobile, pour la réception du signal dérivé du signal du capteur de pression, un dispositif pour transmettre des informations au conducteur concernant la pression ou le changement de pression, ainsi qu'un émetteur pour émettre des signaux d'interrogation et/ou des signaux de commande, un émetteur pour envoyer les signaux d'interrogation et/ou les signaux de commande étant respectivement disposé à proximité de chaque roue, lesdits émetteurs présentant une fréquence d'émission inférieure à 1 MHz, **caractérisé en ce que** l'émetteur pour l'émission de signaux d'interrogation et/ou de signaux de commande est réalisé sous la forme d'un circuit oscillant (10) qui contient un excitateur (3) et un amplificateur (1, 2) possédant une entrée d'amplification et une sortie d'amplification, la sortie d'amplification étant réaccouplée à l'entrée d'amplification.

2. Dispositif selon la revendication 1, **caractérisé en ce que** le circuit oscillant (10) contient un comparateur (6) qui transforme une tension en vigueur à son entrée, qui se modifie au cours du temps, en une tension rectangulaire.

3. Dispositif selon l'une quelconque des revendications précédentes, **caractérisé en ce que** le circuit oscillant (10) est un circuit résonnant monté en série.

4. Dispositif selon l'une quelconque des revendications précédentes, **caractérisé en ce que** le circuit oscillant (10) présente un excitateur (3) qui est disposé dans le passage de roue du véhicule automobile.

5. Dispositif selon l'une quelconque des revendications précédentes, **caractérisé en ce que** l'excitateur (3) est une antenne à tige de ferrite.

6. Dispositif selon l'une quelconque des revendications précédentes, **caractérisé en ce que** le circuit oscillant (10) présente une résistance effective à laquelle contribue principalement l'excitateur (3).

7. Dispositif selon l'une quelconque des revendications précédentes, **caractérisé en ce qu'**on prévoit un appareil de mesure de courant qui mesure le courant circulant à travers l'excitateur (3) et qui fournit ses résultats de mesure à un circuit logique (7, 8).

8. Dispositif selon l'une quelconque des revendications précédentes, **caractérisé en ce que** la performance du circuit oscillant (10) présente une valeur de 20 ou plus.

9. Dispositif selon l'une quelconque des revendications précédentes, **caractérisé en ce que** la fréquence d'émission de l'émetteur pour émettre les signaux d'interrogation et/ou les signaux de commande s'élève de 50 à 300 kHz, de préférence de 70 à 150 kHz.
